# DEMANDE DE BREVET EUROPEEN

(11) **EP 4 497 510 A1**
(43) Date de publication de la demande: **29.01.2025**
(21) Numéro de dépôt: 24190345.9
(22) Date de dépôt: 23.07.2024
(51) Int. Cl.: B05B 9/04, B05B 12/14, B05B 15/55, B01F 35/88, F04B 13/02, B05C 11/10, F04B 15/02, G05D 11/13, B05B 7/26

(54) **PROCÉDÉ DE DOSAGE À ALIMENTATION ALTERNATIVE, ET DISPOSITIFS ASSOCIÉS**

(30) Priorité: 24.07.2023 FR 2307954
(71) Demandeur: Exel Industries, 51200 Epernay (FR)
(72) Inventeur: DE TALHOUET, Philippe, 75116 PARIS (FR); COGNON, Thibault, 92110 CLICHY (FR)
(74) Mandataire: Lavoix

(57) **Abrégé**

La présente invention concerne un procédé de dosage d'un produit multi-composant de revêtement pour application, comprenant les étapes suivantes :
- fourniture d'un dispositif de dosage (10) comprenant une pompe doseuse (14) et des voies d'alimentation en produit composant respectif (16, 18), chaque voie d'alimentation en produit composant (16, 18) étant pourvue d'une vanne respective (34, 36) présentant une configuration fermée et une configuration ouverte, la sortie (28) étant adaptée pour être reliée à un applicateur (13) de produit de revêtement, et
- aspiration par la pompe doseuse (14) d'un volume lors d'une phase d'aspiration de la pompe doseuse (14), au moins deux des vannes respectives (34, 36) étant alternativement, l'une après l'autre, dans la configuration ouverte pendant l'aspiration, de sorte que le volume aspiré lors de ladite phase d'aspiration comprend alternativement une pluralité de produits composants.

L'invention concerne en outre un dispositif de dosage et un dispositif d'application associés.

## Description

La présente invention concerne un procédé de dosage d'un produit multi-composant et de dispositifs associé.

Le produit multi-composant est, par exemple, constitué d'une pluralité de composants qui sont mélangés, en particulier dans des proportions données.

Le document FR 2 928 466 A1 décrit un procédé de commande d'un dispositif de dosage, comprenant une première pompe pour injecter une dose d'un premier composant dans un mélangeur, et une deuxième pompe pour injecter une dose d'un deuxième composant dans le mélangeur.

Toutefois, ce système nécessite une pompe apte à doser pour chaque composant du produit multi-composant.

De plus, le mélange est uniquement réalisé au niveau du mélangeur.

Le but de l'invention est alors de proposer un procédé de dosage plus simple et permettant un mélange amélioré.

A cet effet, l'invention a pour objet un procédé de dosage d'un produit multi-composant de revêtement pour application, comprenant les étapes suivantes :
- fourniture d'un dispositif de dosage comprenant une pompe doseuse et une pluralité de voies d'alimentation en produit composant respectif, la pompe doseuse présentant une entrée et une sortie, l'entrée étant reliée à la pluralité de voies d'alimentation en produit composant respectif, chaque voie d'alimentation en produit composant étant pourvue d'une vanne respective, chaque vanne présentant au moins une configuration fermée, dans laquelle la vanne empêche le passage du produit composant correspondant vers l'entrée, et au moins une configuration ouverte, dans laquelle la vanne permet le passage du produit composant correspondant vers l'entrée, la sortie étant adaptée pour être reliée à un applicateur de produit de revêtement, et
- aspiration par la pompe doseuse d'un volume lors d'une phase d'aspiration de la pompe doseuse, au moins deux des vannes respectives étant alternativement, l'une après l'autre, dans la configuration ouverte pendant l'aspiration, de sorte que le volume aspiré lors de ladite phase d'aspiration comprend alternativement une pluralité de produits composants.

Le dispositif de dosage ne comprend qu'une pompe doseuse, de sorte que le dispositif est plus simple, le choix sélectif de la voie d'alimentation étant réalisé par ouverture sélective de la voie d'alimentation correspondante. En outre, les produits composants sont déjà en contact dans la pompe doseuse. En alternant les produits composants dans le volume en entrée de la pompe doseuse, cela permet d'avoir directement les uns à la suite des autres les différents composants, de manière cyclique, ce qui favorise le mélange.

Suivant d'autres aspects avantageux de l'invention, le procédé de dosage comprend une ou plusieurs des caractéristiques suivantes, prises isolément ou suivant toutes les combinaisons techniquement possibles :
- le dispositif de dosage comprend au moins deux voies d'alimentation en produit composant respectif, une voie d'alimentation en gaz, et une voie d'alimentation en solvant ;
- le produit multi-composant est constitué d'un nombre donné de produits composants, l'aspiration comprenant, dans cet ordre, les étapes suivantes : ouverture d'une première vanne de la voie d'alimentation d'un premier produit composant, aspiration d'un premier volume du premier produit composant par la pompe doseuse, fermeture de la première vanne, ouverture d'une deuxième vanne de la voie d'alimentation d'un deuxième produit composant, aspiration d'un deuxième volume du deuxième produit composant par la pompe doseuse, fermeture de la deuxième vanne, et ainsi de suite jusqu'à la vanne du nombre donné, lesdites étapes précédentes étant répétées pendant toute la phase d'aspiration,
- l'aspiration comprend un cycle d'aspiration, ledit cycle d'aspiration étant réitéré pendant toute la phase d'aspiration, au moins deux des vannes respectives étant l'une après l'autre dans la configuration ouverte pendant le cycle d'aspiration ;
- pendant un cycle d'aspiration, le volume de chaque produit composant respectif aspiré est égal au produit d'un rapport respectif prédéterminé et du volume total de produits composants respectifs aspiré pendant le cycle d'aspiration, la somme des rapports respectifs étant égal à 1 ;
- le procédé de dosage comprend une détection du volume aspiré pendant l'aspiration par la pompe doseuse, plus particulièrement par un capteur de volume aspiré ou un capteur de déplacement de la pompe doseuse ;
- la pompe doseuse est une pompe à piston ;
- chaque voie d'alimentation en produit composant du dispositif de dosage comprend une pompe secondaire respective, la pompe secondaire respective étant adaptée pour pomper le produit composant respectif vers l'entrée de la pompe doseuse, chaque pompe secondaire respective étant agencée en amont de la vanne respective de la voie d'alimentation en produit composant ; et/ou
- le dispositif de dosage comprend un mélangeur en aval de la sortie de la pompe doseuse, plus particulièrement agencé adjacent à la sortie de la pompe doseuse.

L'invention concerne également un dispositif de dosage d'un produit multi-composant comprenant une pompe doseuse, une pluralité de voies d'alimentation en produit composant respectif et un module de contrôle, la pompe doseuse présentant une entrée et une sortie, l'entrée étant reliée à la pluralité de voies d'alimentation en produit composant respectif, chaque voie d'alimentation en produit composant étant pourvue d'une vanne respective, chaque vanne présentant au moins une configuration fermée, dans laquelle la vanne empêche le passage du produit composant correspondant vers l'entrée, et au moins une configuration ouverte, dans laquelle la vanne permet le passage du produit composant correspondant vers l'entrée, la sortie étant adaptée pour être reliée à un applicateur de produit de revêtement, le module de contrôle étant apte à contrôler les vannes respectives, le module de contrôle étant configuré pour mettre en oeuvre une aspiration selon l'étape d'aspiration du procédé tel que précédemment.

L'invention concerne également un dispositif d'application d'un produit de revêtement multi-composant comprenant un dispositif de dosage décrit précédemment et un applicateur de produit de revêtement, l'applicateur de produit de revêtement étant relié à la sortie de la pompe doseuse, de sorte que la pompe doseuse alimente l'applicateur de produit de revêtement.

L'invention apparaîtra plus clairement à la lecture de la description qui va suivre, donnée uniquement à titre d'exemple non limitatif, et faite en référence aux dessins dans lesquels :
[Fig. 1] la figure 1 est une vue schématique d'un exemple de dispositif de dosage en fonctionnement selon un premier mode de réalisation de l'invention,
[Fig. 2] la figure 2 est une vue schématique d'un exemple de dispositif de dosage en fonctionnement selon un deuxième mode de réalisation de l'invention, et
[Fig 3] la figure 3 est un exemple de pompe doseuse pour un dispositif de dosage selon l'invention.

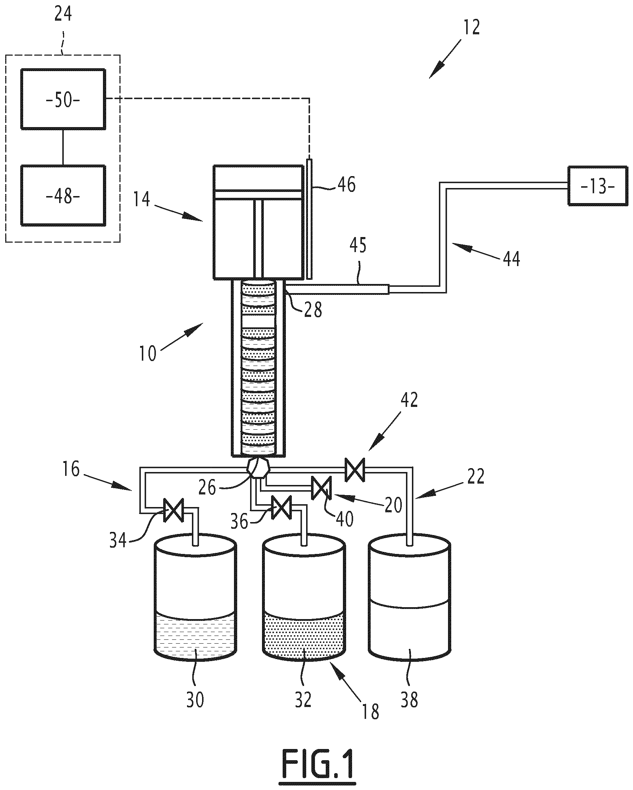

Un premier exemple de dispositif de dosage 10 d'un produit multi-composant de revêtement pour application selon un premier mode de réalisation de l'invention va maintenant être décrit en regard de la figure 1.

Le produit multi-composant de revêtement est, par exemple, une peinture.

Le produit multi-composant de revêtement présente, par exemple, une viscosité comprise entre 100 Cps et 10 000Cps.

Le dispositif de dosage 10 est ici compris dans un dispositif d'application 12 de produit de revêtement.

Le dispositif d'application 12 comprend en outre un applicateur 13 de produit de revêtement.

Le dispositif de dosage 10 comprend une pompe doseuse 14 et une pluralité de voies d'alimentation 16, 18 en produit composant respectif.

Le dispositif de dosage 10 comprend ici en outre une voie d'alimentation en gaz 20 et/ou au moins une voie d'alimentation en solvant 22, ici une voie d'alimentation en gaz 20 et au moins une voie d'alimentation en solvant 22, sur l'exemple représenté, une voie d'alimentation en gaz 20 et une voie d'alimentation en solvant 22.

Le dispositif de dosage 10 comprend en outre ici un dispositif électronique 24.

La pompe doseuse 14 présente une entrée 26 et une sortie 28.

La pompe doseuse est apte à pomper un volume donné de fluide, liquide ou gazeux.

La pompe doseuse présente, par exemple, une cylindrée comprise entre 10cc et 500cc.

La pompe doseuse présente au moins une phase d'aspiration.

Dans un mode de réalisation, la pompe doseuse présente une phase d'aspiration et une phase sans aspiration.

Pendant la phase d'aspiration, un volume correspondant à la cylindrée de la pompe doseuse entre dans la pompe doseuse au niveau de l'entrée. Additionnellement, pendant la phase d'aspiration, un volume correspondant à une première portion, ici la moitié, de la cylindrée de la pompe sort de la pompe au niveau de la sortie.

Pendant la phase sans aspiration, aucun fluide n'entre dans la pompe doseuse au niveau de l'entrée. Un volume correspondant à une deuxième portion, complémentaire de la première portion, ici la moitié, de la cylindrée de la pompe sort de la pompe au niveau de la sortie.

Dans l'exemple représenté, la pompe doseuse 14 est une pompe à piston.

La pompe à piston présente un fonctionnement avec une phase d'aspiration et une phase sans aspiration telles que décrites précédemment.

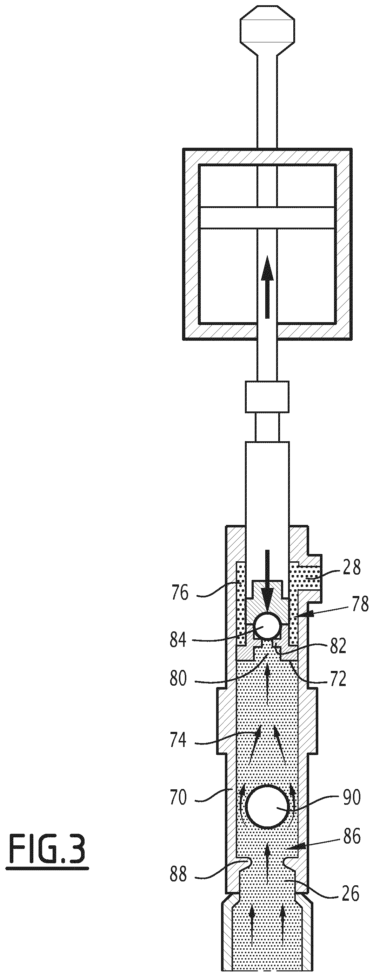

Un exemple de pompe à piston utilisée comme pompe doseuse 14 est, par exemple, représentée sur la figure 3 pendant la phase d'aspiration.

La pompe doseuse comprend, par exemple, un cylindre 70 et une tête 72 de piston, la tête de piston 72 délimitant deux chambres de volume variable dans le cylindre, dite chambre amont 74 et chambre aval 76.

L'entrée 26 est agencée à l'opposé de la sortie 28.

L'entrée 26 débouche dans la chambre amont 74 à l'opposé de la chambre aval 76, la sortie 28 débouche dans la chambre aval 76 à l'opposé de la chambre amont 74.

La tête 72 de piston est, ici, pourvue d'un clapet de refoulement 78.

La tête de piston délimite une ouverture 80 pour le passage de fluide de la chambre amont 74 à la chambre aval 76, le clapet de refoulement 78 empêchant le passage de fluide de la chambre aval 76 à la chambre amont 74.

Le clapet de refoulement 78 comprend, par exemple, un siège 82 délimité par la tête et entourant l'ouverture et une bille 84 apte à reposer sur le siège 82.

La pompe à piston est en outre pourvu d'un clapet d'aspiration 86 agencé au niveau de l'entrée 26 de la pompe doseuse.

Le clapet d'aspiration empêche la sortie de fluide de la pompe doseuse au niveau de l'entrée 26.

Le clapet d'aspiration comprend, par exemple, un siège 88 entourant l'entrée 26 et une bille 90 apte à reposer sur le siège.

Lors de la phase d'aspiration de la pompe doseuse, la tête de piston 72 se déplace vers la sortie 28. Le volume contenu dans la chambre aval 76 est expulsé par la sortie 28. En outre, une dépression se crée dans la chambre amont 74, et un fluide est aspiré à l'entrée 26, plus particulièrement correspondant à la cylindrée de la pompe.

Plus particulièrement, la bille 90 du clapet d'aspiration 86 s'éloigne du siège 88 à cause de la dépression générée dans la chambre amont 74, et la bille 84 du clapet de refoulement 78 reposant sur le siège 82 à cause de la surpression dans la chambre aval.

Lors de la phase sans aspiration de la pompe doseuse, la tête de piston se déplace vers l'entrée 26. Aucun fluide n'entre par l'entrée 26. Tout le volume contenu dans la chambre amont 74 se déplace vers la chambre aval 76. Une portion du volume total de la pompe, ici la moitié, est expulsé depuis la chambre aval 76 par la sortie 28.

Plus particulièrement, la bille 90 du clapet d'aspiration 86 repose sur son siège 88 à cause de la surpression générée dans la chambre amont 74, et la bille 84 du clapet de refoulement 78 s'éloigne de son siège 82 et libère l'ouverture 80 à cause de la dépression dans la chambre aval 76.

Ici, pendant la phase d'aspiration, un volume correspondant à la cylindrée de la pompe doseuse entre dans la pompe doseuse au niveau de l'entrée, et le volume correspondant à la moitié du volume sort de la pompe au niveau de la sortie, et pendant la phase sans aspiration, un volume correspondant à moitié du volume de la pompe doseuse sort de la pompe au niveau de la sortie, et aucun fluide n'entre dans la pompe doseuse au niveau de l'entrée.

Alternativement, la pompe doseuse comprend un piston comprenant une tête ne présentant pas d'ouverture et définissant deux chambres ne communiquant pas, dont une chambre de pompage. L'entrée et la sortie de la pompe doseuse sont agencées dans la même chambre de pompage. L'entrée et la sortie débouchent plus particulièrement dans la chambre de pompage à l'opposé de l'autre chambre délimitée par la tête. L'entrée et la sortie sont, par exemple, chacune équipée d'une vanne anti-retour. La pompe doseuse présente alors une phase d'aspiration, dans laquelle la pompe aspire un volume de fluide, par exemple équivalent à la cylindrée de la pompe, et n'expulse pas de fluide et une phase sans aspiration, dans laquelle la pompe expulse ledit volume de fluide.

Alternativement à la pompe à piston, la pompe doseuse est une pompe à membranes ou une pompe à billes.

La sortie 28 est adaptée pour être reliée à l'applicateur 13 de produit de revêtement, de sorte que la pompe doseuse 14 alimente l'applicateur de produit de revêtement.

L'applicateur 13 est, par exemple, un ou plusieurs pistolets de pulvérisation ou un ou plusieurs bols rotatifs de pulvérisation, ou une ou plusieurs vannes d'écoulement.

L'entrée est reliée à la pluralité de voies d'alimentation en produit composant respectif 16, 18, et en outre à la voie d'alimentation en gaz 20 et/ou la voie d'alimentation en solvant 22 le cas échéant.

Dans l'exemple représenté, un connecteur est agencé à l'entrée 26.

Le connecteur est, par exemple, un bloc de distribution.

Le connecteur est relié à chacune des voies d'alimentation.

Chaque voie d'alimentation en produit composant 16, 18 est apte à alimenter l'entrée de la pompe doseuse 14 du produit composant correspondant, par exemple à partir d'un réservoir respectif 30, 32 propre à ladite voie d'alimentation contenant du produit composant correspondant.

Les voies d'alimentation en produit composant 16, 18 se rencontrent, par exemple, en amont de l'entrée au niveau d'un point de connexion, le point de connexion étant relié à l'entrée.

Le point de connexion est, par exemple, adjacent à l'entrée 26.

Alternativement, chaque voie d'alimentation en produit composant 16, 18 est reliée à l'entrée 26 séparément les unes des autres.

Chaque voie d'alimentation en produit composant 16, 18 est pourvue d'une vanne respective 34, 36.

La vanne respective 34, 36 est agencée en amont de l'entrée 26, plus particulièrement en amont du point de connexion le cas échéant.

La vanne respective 34, 36 est ici agencée en aval du réservoir respectif 30, 32.

Chaque vanne 34, 36 présente au moins une configuration fermée, dans laquelle la vanne empêche le passage du produit composant correspondant à travers ladite vanne, c'est-à-dire ici vers l'entrée 26, et au moins une configuration ouverte, dans laquelle la vanne permet le passage du produit composant correspondant à traves ladite vanne, c'est-à-dire ici vers l'entrée 26.

Chaque vanne 34, 36 présente ici une configuration fermée et une pluralité de configurations ouvertes. Les débits d'écoulement du produit composant correspondant à travers ladite vanne diffèrent selon les configurations ouvertes.

Alternativement, chaque vanne 34, 36 présente ici uniquement une configuration fermée et une configuration ouverte.

Le débit d'écoulement du produit composant correspondant dans la voie d'alimentation est alors, par exemple, réglable en un autre emplacement sur la voie d'alimentation, par exemple avec une vanne de réglage de débit, par exemple au niveau de l'applicateur 13 ou sur la ligne de sortie 44.

La voie d'alimentation en gaz 20 est apte à alimenter l'entrée 26 en gaz, plus particulièrement en air, par exemple en air comprimé.

La voie d'alimentation en solvant 22 est apte à alimenter l'entrée 26 en solvant, par exemple à partir d'un réservoir de solvant 38 contenant du solvant.

Dans un mode de réalisation, la voie d'alimentation en solvant est une voie d'alimentation en produit composant, telle que décrite précédemment, le produit multi-composant comprenant du solvant.

La voie d'alimentation en gaz 20 et la voie d'alimentation en solvant 22 se rencontrent, par exemple, en amont de l'entrée au niveau d'un point de connexion, le point de connexion étant relié à l'entrée. Le point de connexion est, par exemple, le même que le point de connexion des voies d'alimentation en produit composant 16, 18, l'ensemble des voies d'alimentation se rencontrant audit point de connexion.

Alternativement, chaque voie d'alimentation 16, 18, 20, 22 est reliée à l'entrée 26 séparément les unes des autres.

La voie d'alimentation en gaz 20 est pourvue d'une vanne de gaz 40.

Plus particulièrement, dans l'exemple représenté, la vanne de gaz 40 est agencée à l'extrémité amont de la voie d'alimentation en gaz 20.

La vanne de gaz 40 est, par exemple, apte à prélever du gaz, plus particulièrement de l'air, dans l'atmosphère entourant le dispositif de dosage 10.

La vanne de gaz 40 est agencée en amont de l'entrée 26, plus particulièrement en amont du point de connexion le cas échéant.

La vanne de gaz 40 présente au moins une configuration fermée, dans laquelle la vanne empêche le passage de gaz à travers la vanne 40 vers l'entrée 26, et au moins une configuration ouverte, dans laquelle la vanne permet le passage de gaz à travers la vanne 40 vers l'entrée 26.

Tel que décrit précédemment en regard des vannes 34, 36, la vanne de gaz 40 présente, par exemple, une configuration fermée et une pluralité de configurations ouvertes, ou alternativement uniquement une configuration fermée et une configuration ouverte.

La voie d'alimentation en solvant 22 est pourvue d'une vanne de solvant 42.

La vanne de solvant 42 est agencée en amont de l'entrée 26, plus particulièrement en amont du point de connexion le cas échéant.

La vanne de solvant 42 est ici agencée en aval du réservoir de solvant 38.

La vanne de solvant 42 présente au moins une configuration fermée, dans laquelle la vanne empêche le passage de solvant à travers la vanne 42 vers l'entrée, et au moins une configuration ouverte, dans laquelle la vanne permet le passage de solvant à travers la vanne 42 vers l'entrée 26.

Tel que décrit précédemment en regard des vannes 34, 36, la vanne de solvant 42 présente, par exemple, une configuration fermée et une pluralité de configurations ouvertes, ou alternativement uniquement une configuration fermée et une configuration ouverte.

Le dispositif d'application 12 comprend en outre une ligne de sortie 44.

La ligne de sortie 44 s'étend ici entre une extrémité amont et une extrémité aval.

La ligne de sortie 44, plus particulièrement l'extrémité amont, est reliée à la sortie 28 de la pompe doseuse 14.

L'extrémité aval est reliée à l'applicateur 13.

Plus particulièrement, la pompe doseuse 14 expulse le produit contenu dans la pompe doseuse dans la ligne de sortie 44.

Le dispositif de dosage 10 comprend, en outre, un mélangeur 45, ici un mélangeur mécanique, plus particulièrement un mélangeur statique, en aval de la sortie 28 de la pompe doseuse, plus particulièrement agencé adjacent à la sortie 28 de la pompe doseuse.

Le mélangeur 45 est ici agencé dans la ligne de sortie 44, plus particulièrement à l'extrémité amont de la ligne de sortie 44.

Le dispositif de dosage 10 est, en outre, ici pourvu d'un capteur 46 de volume entrant dans la pompe doseuse 14 ou un capteur de déplacement de la pompe doseuse 14.

Dans l'exemple représenté, la capteur 46 est apte à et agencé pour mesurer le déplacement du piston de la pompe doseuse 14.

Alternativement, le capteur 46 est apte à détecter un paramètre relatif à la pompe doseuse, ledit paramètre dépendant directement du volume entrant dans la pompe doseuse 14.

Additionnellement ou alternativement, le capteur 46 est agencé au niveau de l'entrée 26 et mesure le volume de fluide entrant dans la pompe doseuse 14 par l'entrée 26.

Le capteur 46 fournit, par exemple, un signal analogique, par exemple le volume entrant ou le déplacement du piston.

Alternativement, le capteur 46 fournit un signal numérique, par exemple, un cran ou correspondant à un seuil de déplacement du piston ou de volume entrant.

Le dispositif électronique 24 comprend une unité de traitement d'informations formée par exemple d'une mémoire et d'un processeur associé à la mémoire.

Le dispositif électronique 24 comprend un module de commande 48.

Le module de commande 48 est apte à contrôler les vannes respectives 34, 36 des voies d'alimentation, plus particulièrement tel que décrit par la suite.

Le module de commande 48 est, par exemple, relié aux vannes 34, 36, par exemple de manière filaire ou par une connexion à distance.

Le module de commande 48 est en outre apte à contrôler la vanne de gaz 40 et la vanne de solvant 42, le cas échéant.

Le module de commande 48 est, par exemple, relié aux vannes 40, 42, par exemple de manière filaire ou par une connexion à distance.

Le temps de réponse pour chacune des vannes 34, 36, 40, 42 à partir de la commande du module de commande 48 est comprise entre 100 et 250 millisecondes.

Le module de commande 48 est configuré pour mettre en oeuvre l'aspiration telle que décrite dans le procédé de dosage décrit par la suite.

Le dispositif de contrôle 24 comprend en outre un module de suivi 50.

Le module de suivi 50 est relié au module de commande 48.

Le module de suivi 50 est en outre connecté au capteur 46, par exemple de manière filaire ou par une connexion à distance.

Plus particulièrement, le module de suivi 50 est adapté pour recevoir des informations du capteur 46, plus particulièrement le signal fourni par le capteur 46 comprenant les mesures réalisées par le capteur 46.

Le module de suivi 50 est apte à déterminer la quantité de volume entrant dans la pompe doseuse 14 et la nature du fluide entrant dans la pompe 14, en fonction de la configuration de chacune des vannes.

Le module de suivi 50 est alors apte à déterminer la quantité de chaque fluide entrant successivement dans la pompe doseuse 14.

Le module de commande 48, et le cas échéant, le module de suivi 50 sont réalisés chacun sous forme d'un logiciel, ou d'une brique logicielle, exécutable par le processeur. La mémoire du dispositif électronique est alors apte à stocker un logiciel de commande et un logiciel de suivi. Le processeur est alors apte à exécuter chacun des logiciels parmi le logiciel de commande et le logiciel de suivi.

En variante non représentée, le module de commande 48, et le cas échéant, le module de suivi 50 sont réalisés chacun sous forme d'un composant logique programmable, tel qu'un FPGA (de l'anglais *Field Programmable Gate Array*), ou encore d'un circuit intégré, tel qu'un ASIC (de l'anglais *Application Specific Integrated Circuit*)*.*

Lorsque le dispositif électronique est réalisé sous forme d'un ou plusieurs logiciels, c'est-à-dire sous forme d'un programme d'ordinateur, également appelé produit programme d'ordinateur, il est en outre apte à être enregistré sur un support, non représenté, lisible par ordinateur. Le support lisible par ordinateur est par exemple un medium apte à mémoriser des instructions électroniques et à être couplé à un bus d'un système informatique. A titre d'exemple, le support lisible est un disque optique, un disque magnéto-optique, une mémoire ROM, une mémoire RAM, tout type de mémoire non-volatile (par exemple FLASH ou NVRAM) ou une carte magnétique. Sur le support lisible est alors mémorisé un programme d'ordinateur comprenant des instructions logicielles.

Dans l'exemple de la figure 1, le fluide est aspiré par la pompe doseuse 14, lors de la phase d'aspiration, par une aspiration dite passive, c'est-à-dire que, pendant la phase d'aspiration, la pompe doseuse 14 créée une dépression à son entrée 26, ce qui attire un fluide, plus particulièrement le ou les fluides provenant d'une voie dont la vanne correspondante est en configuration ouverte.

Un tel dispositif est particulièrement simple.

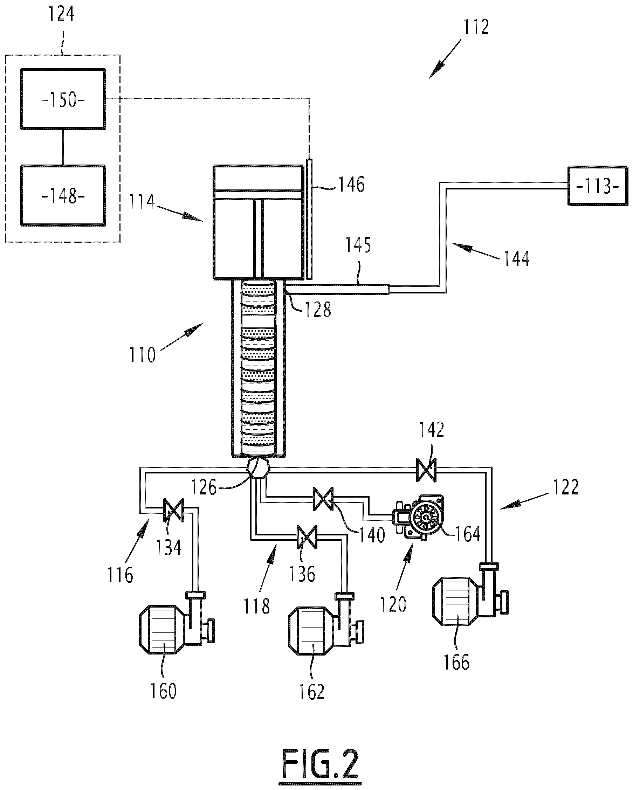

Un deuxième exemple de dispositif de dosage 110 d'un produit multi-composant de revêtement pour application selon un deuxième mode de réalisation de l'invention va maintenant être décrit en regard de la figure 2.

Seules les caractéristiques par lesquelles ce deuxième mode de réalisation diffère du premier mode de réalisation vont être décrites ici. A l'exception de ces caractéristiques, le dispositif de dosage 110 est identique par ailleurs au premier exemple de dispositif de dosage.

Les éléments identiques ou similaires présentent la même référence numérique incrémentée de 100.

Dans le deuxième mode de réalisation, chaque voie d'alimentation 116, 118 en produit composant comprend une pompe secondaire 160, 162 respective, la pompe secondaire respective 160, 162 étant adaptée pour pomper le produit composant respectif vers l'entrée 126 de la pompe doseuse 114.

Chaque pompe secondaire respective 160, 162 est agencée en amont de la vanne respective 134, 136 de la voie d'alimentation 116, 118.

Chaque pompe secondaire respective 160, 162 est, par exemple, agencée en aval d'un réservoir respectif (non représenté).

La voie d'alimentation en gaz 120 est pourvue d'un compresseur 164, le compresseur 164 étant adapté pour comprimer le gaz vers l'entrée 126 de la pompe doseuse 114.

Le compresseur 164 est agencé en amont de la vanne de gaz 140.

Le compresseur 164 est, plus particulièrement, apte à prélever du gaz, plus particulièrement de l'air, dans l'atmosphère l'entourant, et à comprimer ledit gaz dans la voie d'alimentation en gaz 120 en amont de la vanne de gaz.140.

La voie d'alimentation en solvant 122 est pourvue d'une pompe secondaire en solvant 166, la pompe secondaire en solvant 166 étant adaptée pour pomper le solvant vers l'entrée 126 de la pompe doseuse 114.

La pompe secondaire en solvant 166 est agencée en amont de la vanne de solvant 142.

La pompe secondaire en solvant 166 est, par exemple, agencée en aval d'un réservoir en solvant (non représenté).

Dans l'exemple de la figure 2, le fluide est aspiré, lors de la phase d'aspiration, par la pompe doseuse 114 par une aspiration dite active, c'est-à-dire que le fluide est poussé vers l'entrée 126 par la pompe secondaire correspondante ou le compresseur. Pendant la phase d'aspiration, la pompe doseuse 114 aspire alors le fluide poussé, plus particulièrement le ou les fluides provenant d'une voie dont la vanne correspondante est en configuration ouverte.

Un procédé de dosage d'un produit multi-composant de revêtement pour application va maintenant être décrit.

Le procédé de dosage comprend les étapes suivantes :
- fourniture d'un dispositif de dosage 10, 110 tel que décrit précédemment, et
- aspiration par la pompe doseuse 14, 114 d'un volume lors d'une phase d'aspiration de la pompe doseuse 14, 114.

Plus particulièrement, le procédé de dosage comprend une telle étape d'aspiration pendant chacune des phases d'aspiration de la pompe doseuse 14, 114.

Pendant l'aspiration, au moins deux des vannes respectives 34, 36 ; 134, 136 des voies d'alimentation 16, 18 ; 116, 118 sont alternativement, l'une après l'autre, dans la configuration ouverte, de sorte que le volume aspiré lors de ladite phase d'aspiration comprend alternativement une pluralité de produits composants.

Le module de commande 48, 148 met en oeuvre l'étape d'aspiration par contrôle successif des vannes.

Une pluralité de produits composants constitue le produit multi-composant.

Le produit multi-composant est ici constitué d'un nombre donné de produits composants.

Dans un mode de réalisation particulier, le produit multi-composant est ici constitué d'un nombre donné de produits composants dans des proportions prédéterminées.

Lors de l'aspiration, les vannes 34, 36 ; 134, 136 des voies d'alimentation 16, 18 ; 116, 118 correspondant auxdits produits composants du nombre donné de produits composants sont alternativement, l'une après l'autre, placé dans la configuration ouverte.

Le volume minimal aspiré d'un des produits composants ou de solvant lors d'une ouverture de vanne est, par exemple, supérieur ou égal à 0,5 centimètre cube, plus particulièrement supérieur ou égal à 1 centimètre cube, plus particulièrement compris entre 1 et 20 centimètres cube.

Le volume maximal aspiré d'un des produits composants ou de solvant lors d'une ouverture de vanne est, par exemple, inférieur ou égal à 1000 centimètre cube, plus particulièrement compris entre 100 et 1000 centimètre cube.

A tout instant, au plus une vanne des voies d'alimentation ou de gaz ou de solvant est ouverte à la fois.

Ici, l'aspiration comprend, dans cet ordre, les étapes suivantes :
- ouverture d'une première vanne de la voie d'alimentation d'un premier produit composant,
- aspiration du premier produit composant par la pompe doseuse pour aspiration d'un premier volume,
- fermeture de la première vanne,
- ouverture d'une deuxième vanne de la voie d'alimentation d'un deuxième produit composant,
- aspiration du deuxième produit composant par la pompe doseuse pour aspiration d'un deuxième volume,
- fermeture de la deuxième vanne,
et ainsi de suite jusqu'à la vanne du nombre donné, lesdites étapes précédentes étant répétées pendant toute la phase d'aspiration.

Le premier volume et le deuxième volume restent ici respectivement identiques entre les itérations des étapes précédentes.

Alternativement, les étapes d'aspiration sont mises en oeuvre selon une durée : le premier produit composant est aspiré pendant une première durée, et le deuxième produit composant est aspiré pendant une deuxième durée, la première durée et la deuxième durée restant respectivement identique entre les itérations des étapes.

Lors de la phase d'aspiration, chaque vanne d'un produit composant le produit multi-composant est, tour à tour, ouverte, puis fermée, cela étant répétée pendant toute la durée de la phase d'aspiration de la pompe doseuse 14, 114.

L'aspiration comprend ici un cycle d'aspiration.

Pendant un cycle d'aspiration, au moins deux des vannes respectives sont, tour à tour, dans la configuration ouverte.

Plus particulièrement, pendant un cycle d'aspiration, au moins deux des vannes respectives sont, tour à tour, ouverte puis fermée.

Ledit cycle d'aspiration est réitéré pendant toute la phase d'aspiration.

Ainsi, le volume aspiré par la pompe doseuse 14, 114 pendant chacune de ses phases d'aspiration comprend une alternance de produits composants sous forme de tranches, qui se répètent le long du volume aspiré.

Si à la fin d'une phase d'aspiration, un cycle d'aspiration est en cours, ledit cycle d'aspiration reprend là où il s'est interrompu lors de la phase d'aspiration suivante.

A titre d'exemple, pour un volume d'aspiration de la pompe de 100cc, si le volume de premier produit composant à aspirer est de 1 cc et de deuxième produit composant de 51cc, alors, lors de la première phase d'aspiration, il est, par exemple, aspiré successivement : 1 cc du premier produit composant, 51 cc du deuxième produit composant, 1 cc du premier produit composant, puis uniquement 47 cc du deuxième produit composant. Ainsi, la deuxième phase d'aspiration commence par l'aspiration de 4 cc de deuxième produit composant, puis reprend un cycle d'aspiration, et ainsi de suite.

Dans un mode de réalisation particulier, pendant un cycle d'aspiration, le volume de chaque produit composant respectif aspiré est égal au produit d'un rapport respectif prédéterminé et du volume total de produits composants respectifs aspiré pendant le cycle d'aspiration, la somme des rapports respectifs étant égal à 1.

Le rapport respectif correspond à la proportion prédéterminée dudit produit composant dans le produit multi-composant.

Plus particulièrement, la vanne d'un produit composant en cours d'aspiration est déplacée en configuration fermée, plus particulièrement par le module de commande 48, lorsque le volume dudit produit composant est égal au produit d'un rapport respectif prédéterminé et du volume total de produits composants respectifs aspiré pendant le cycle d'aspiration.

Le produit en sortie 28, 128 de la pompe doseuse 14, 114 est alors dans les proportions souhaitées pour le produit multi-composant.

Par exemple, pour un produit multi-composant comprenant des produits A et B dans un ratio 1 :100, alors le rapport respectif est ici de 1/101 pour le produit A et de 100/101 pour le produit B. S'il est aspiré un volume donné du produit A, alors il est ensuite aspiré 100 fois ledit volume donné du produit B.

Le procédé de dosage comprend avantageusement une détection du volume aspiré pendant l'aspiration par la pompe doseuse 14, 114, plus particulièrement par le capteur 46, 146.

Pendant l'aspiration, le module de suivi 50, 150 du dispositif électronique 24, 124 est alors apte à déterminer la quantité de chaque fluide entrant successivement dans la pompe doseuse 14, 114.

Pendant l'aspiration, lorsqu'un produit composant est aspiré par la pompe doseuse 14, 114, lorsque la quantité de produit composant aspiré surveillée par le module de suivi 50, 150 atteint la quantité souhaitée, alors le module de commande 48, 148 envoie une instruction à la vanne correspondante de passer en configuration fermée, puis, par exemple, envoie une instruction à la vanne suivante de passer en configuration ouverte.

Dans l'exemple décrit précédemment, pendant l'aspiration, la pompe doseuse 14, 114 expulse en outre une portion, ici la moitié de la cylindrée de la pompe doseuse, de fluide au niveau de la sortie 28 ; 128 vers la ligne de sortie 44 ; 144.

Lorsque la pompe doseuse comprend une phase d'aspiration et une phase sans aspiration, lors de la phase sans aspiration, les vannes 34, 36, 134, 136 et le cas échéant 40, 42, 140, 142 sont en configuration fermée si le volume cible a bien été aspiré lors de la phase d'aspiration précédente. Plus particulièrement, le module de commande 48, 148 envoie un signal aux vannes 34, 36, 134, 136 et le cas échéant 40, 42, 140, 142 de se déplacer en configuration fermée, si elles ne le sont pas déjà.

Si le volume cible du fluide en cours d'aspiration à la fin de la phase d'aspiration n'a pas été aspiré lors d'une phase d'aspiration, alors la vanne correspondante reste ouverte, pendant la phase sans aspiration, jusqu'à ce que le complément soit aspiré dès le début de la prochaine phase d'aspiration.

Ainsi, le procédé de dosage comprend alternativement une étape d'aspiration et étape sans aspiration.

Lors de l'étape sans aspiration, dans l'exemple décrit précédemment, la pompe doseuse expulse une portion complémentaire de la portion expulsée pendant l'aspiration, ici la moitié de la cylindrée de la pompe doseuse, de fluide au niveau de la sortie 28.

Dans l'exemple décrit précédemment, pendant l'aspiration, la pompe doseuse 14, 114 expulse en outre une portion, ici la moitié de la cylindrée de la pompe doseuse, de fluide au niveau de la sortie 28.

En alternant les produits composants dans le volume en entrée de la pompe doseuse, cela permet d'avoir directement les uns à la suite des autres les différents composants, de manière cyclique, ce qui favorise le mélange.

En particulier, dans le cas d'une pompe à piston telle que décrit ci-dessus, le déplacement de la tête de piston réalise déjà un pré-mélange entre les tranches dans la pompe doseuse.

Cela permet alors un mélange amélioré du produit multi-composant.

## Revendications

1. Procédé de dosage d'un produit multi-composant de revêtement pour application, comprenant les étapes suivantes :
- fourniture d'un dispositif de dosage (10 ; 110) comprenant une pompe doseuse (14 ; 114) et une pluralité de voies d'alimentation en produit composant respectif (16, 18 ; 116, 118), la pompe doseuse (14 ; 114) présentant une entrée (26 ; 126) et une sortie (28 ; 128), l'entrée (26 ; 126) étant reliée à la pluralité de voies d'alimentation en produit composant respectif (16, 18 ; 116, 118), chaque voie d'alimentation en produit composant (16, 18 ; 116, 118) étant pourvue d'une vanne respective (34, 36 ; 134, 136), chaque vanne (34, 36 ; 134, 136) présentant au moins une configuration fermée, dans laquelle la vanne (34, 36 ; 134, 136) empêche le passage du produit composant correspondant vers l'entrée (26 ; 126), et au moins une configuration ouverte, dans laquelle la vanne (34, 36 ; 134, 136) permet le passage du produit composant correspondant vers l'entrée (26 ; 126), la sortie (28 ; 128) étant adaptée pour être reliée à un applicateur (13) de produit de revêtement, et
- aspiration par la pompe doseuse (14 ; 114) d'un volume lors d'une phase d'aspiration de la pompe doseuse (14 ; 114), au moins deux des vannes respectives (34, 36 ; 134, 136) étant alternativement, l'une après l'autre, dans la configuration ouverte pendant l'aspiration, de sorte que le volume aspiré lors de ladite phase d'aspiration comprend alternativement une pluralité de produits composants,
dans lequel l'aspiration comprend un cycle d'aspiration, ledit cycle d'aspiration étant réitéré pendant toute la phase d'aspiration, au moins deux des vannes respectives (16, 18 ; 116, 118) étant l'une après l'autre dans la configuration ouverte pendant le cycle d'aspiration, et
dans lequel, si à la fin d'une phase d'aspiration, un cycle d'aspiration est en cours, ledit cycle d'aspiration reprend là où il s'est interrompu lors d'une phase d'aspiration suivante.

2. Procédé de dosage selon la revendication 1, dans lequel le dispositif de dosage (10 ; 110) comprend au moins deux voies d'alimentation en produit composant respectif (16, 18 ; 116, 118), une voie d'alimentation en gaz (20 ; 120), et une voie d'alimentation en solvant (22 ; 122).

3. Procédé de dosage selon la revendication 1 ou 2, dans lequel le produit multi-composant est constitué d'un nombre donné de produits composants, l'aspiration comprenant, dans cet ordre, les étapes suivantes : ouverture d'une première vanne de la voie d'alimentation d'un premier produit composant, aspiration d'un premier volume du premier produit composant par la pompe doseuse (14 ; 114), fermeture de la première vanne, ouverture d'une deuxième vanne de la voie d'alimentation d'un deuxième produit composant, aspiration d'un deuxième volume du deuxième produit composant par la pompe doseuse (14 ; 114), fermeture de la deuxième vanne, et ainsi de suite jusqu'à la vanne du nombre donné, lesdites étapes précédentes étant répétées pendant toute la phase d'aspiration.

4. Procédé de dosage selon l'une quelconque des revendications 1 à 3, dans lequel, pendant un cycle d'aspiration, le volume de chaque produit composant respectif aspiré est égal au produit d'un rapport respectif prédéterminé et du volume total de produits composants respectifs aspiré pendant le cycle d'aspiration, la somme des rapports respectifs étant égal à 1.

5. Procédé de dosage selon l'une quelconque des revendications 1 à 4, comprenant une détection du volume aspiré pendant l'aspiration par la pompe doseuse (14 ; 114), plus particulièrement par un capteur de volume aspiré ou un capteur de déplacement de la pompe doseuse (46 ; 146).

6. Procédé de dosage selon l'une quelconque des revendications 1 à 5, dans lequel la pompe doseuse (14 ; 114) est une pompe à piston.

7. Procédé de dosage selon l'une quelconque des revendications 1 à 6, dans lequel chaque voie d'alimentation en produit composant (116, 118) du dispositif de dosage (110) comprend une pompe secondaire respective (160, 162), la pompe secondaire respective (160 ; 162) étant adaptée pour pomper le produit composant respectif vers l'entrée (126) de la pompe doseuse (114), chaque pompe secondaire respective (160, 162) étant agencée en amont de la vanne respective (134, 136) de la voie d'alimentation en produit composant (116, 118).

8. Procédé de dosage selon l'une quelconque des revendications 1 à 7, dans lequel le dispositif de dosage (10 ; 110) comprend un mélangeur (45 ; 145) en aval de la sortie (28 ; 128) de la pompe doseuse (14 ; 114), plus particulièrement agencé adjacent à la sortie (28 ; 128) de la pompe doseuse (14 ; 114).

9. Dispositif de dosage (10 ; 110) d'un produit multi-composant comprenant une pompe doseuse (14 ; 114), une pluralité de voies d'alimentation en produit composant respectif (16, 18 ; 116, 118) et un module de contrôle (48 ; 148), la pompe doseuse (14 ; 114) présentant une entrée (26 ; 126) et une sortie (28 ; 128), l'entrée (26 ; 126) étant reliée à la pluralité de voies d'alimentation en produit composant respectif (16, 18 ; 116, 118), chaque voie d'alimentation en produit composant (16, 18 ; 116, 118) étant pourvue d'une vanne respective (34, 36 ; 134, 136), chaque vanne (34, 36 ; 134, 136) présentant au moins une configuration fermée, dans laquelle la vanne (34, 36 ; 134, 136) empêche le passage du produit composant correspondant vers l'entrée (26 ; 126), et au moins une configuration ouverte, dans laquelle la vanne (34, 36 ; 134, 136) permet le passage du produit composant correspondant vers l'entrée (26 ; 126), la sortie (28 ; 128) étant adaptée pour être reliée à un applicateur (13) de produit de revêtement, le module de contrôle (48 ; 148) étant apte à contrôler les vannes respectives (34, 36 ; 134, 136), le module de contrôle (48 ; 148) étant configuré pour mettre en oeuvre une aspiration selon l'étape d'aspiration du procédé selon l'une quelconque des revendications 1 à 8.

10. Dispositif d'application (12) d'un produit de revêtement multi-composant comprenant un dispositif de dosage (10 ; 110) selon la revendication 9 et un applicateur de produit de revêtement (13 ; 113), l'applicateur de produit de revêtement (13 ; 113) étant relié à la sortie (28 ; 128) de la pompe doseuse (14 ; 114), de sorte que la pompe doseuse (14 ; 114) alimente l'applicateur de produit de revêtement (13 ; 113).
